# EUROPÄISCHE PATENTSCHRIFT

(11) **EP 0 919 975 B1**
(45) Veröffentlichungstag und Bekanntmachung des Hinweises auf die Patenterteilung: **04.12.2002**
(21) Anmeldenummer: 98117581.3
(22) Anmeldetag: 16.09.1998
(51) Int. Cl.: G08G 1/0968, G08G 1/0969

(54) **Navigationsverfahren für Kraftfahrzeuge sowie Navigationsvorrichtung für dessen Durchführung**
Navigation method for vehicles and navigation device for carrying out the method
Procédé de navigation pour véhicules ainsi que l'appareil de navigation pour sa mise en oeuvre

(30) Priorität: 04.10.1997 DE 19743930
(43) Veröffentlichungstag der Anmeldung: 02.06.1999
(73) Patentinhaber: Volkswagen Aktiengesellschaft, 38436 Wolfsburg (DE)
(72) Erfinder: Kiesewetter, Thomas, 38118 Braunschweig (DE)

(56) Entgegenhaltungen:
- EP-A- 0 323 246
- EP-A- 0 790 593
- DE-A- 19 535 576
- US-A- 5 231 584
- US-A- 5 543 789

## Beschreibung

Die vorliegende Erfindung betrifft ein Navigationsverfahren für Kraftfahrzeuge mit einer Navigationsvorrichtung umfassend eine Recheneinheit zur Ausgabe von Fahrtroutenempfehlungen, wobei die Recheneinheit Zugriff auf einen Wegenetzspeicher und eine weitere Speichereinheit hat, in der Positionsdaten abspeicherbar sind.

Ein Navigationsverfahren der vorgenannten Art ist aus der deutschen Offenlegungsschrift 44 29 322 A1 bekannt. Bei dem darin beschriebenen Navigationsverfahren können vom aktuellen Standort aus durchgeführte frühere Fahrtrouten in der Speichereinheit abgelegt und für die Bestimmung der aktuellen Fahrtroute bereitgehalten werden. Die von der Recheneinheit ausgegebenen Fahrtroutenempfehlungen dienen dem Zweck, von einem bestimmten Standort aus häufig durchgeführte Fahrten automatisch anwählbar zu gestalten. Als nachteilig dabei erweist sich, daß keine Fahrtrouten empfohlen werden können von Standorten, die noch nie Ausgangspunkt einer Fahrt waren.

Aus der US-5, 543, 789 ist eine Navigationsvorrichtung bekannt, umfassend eine Recheneinheit, einen Wegenetzspeicher außerhalb des Kraftfahrzeuges und eine weitere im Kraftfahrzeug untergebrachte Speichereinheit, wobei die Navigationsvorrichtung über eine Kommunikationseinrichtung, die vorzugsweise als Mobilfunktelefon ausgeführt ist, mit dem Off-Board-Navigationssystem verbunden ist.

Aus der EP 0 323 246 A2 ist eine Navigationsvorrichtung für Kraftfahrzeuge bekannt, umfassend eine Recheneinheit zur Ausgabe von Fahrtroutenempfehlungen, wobei die Recheneinheit Zugriff auf einen Wegenetzspeicher und eine weitere Speichereinheit hat, in der Positionsdaten abspeicherbar sind, wobei bei einer Fahrt der Startpunkt in der Speichereinheit abgelegt wird, der abgelegte Startpunkt als Zielpunkt für die nächste Fahrt bereitgehalten wird und der Benutzer des Kraftfahrzeuges bei Beginn jeder Fahrt über eine Eingabeeinheit als Zielpunkt den Startpunkt der letzten Fahrt auswählen kann.

Der Erfindung liegt ausgehend von der EP 0 323 246 A2 das technische Problem zugrunde, ein Navigationsverfahren und eine Navigationsvorrichtung zu schaffen, mittels derer die Benutzerfreundlichkeit hinsichtlich der Zieleingabe weiter verbessert wird.

Die Lösung des technischen Problems ergibt sich durch die Gegenstände mit den Merkmalen der Patentansprüche 1 und 2. Weitere vorteilhafte Ausgestaltungen der Erfindung ergeben sich aus den Unteransprüchen.

Hierzu werden die Startpunkte verschiedener Fahrten in ihrer Reihenfolge in der Speichereinheit abgelegt und von der Recheneinheit bei Beginn jeder Fahrt die Startpunkte der letzten Fahren in umgekehrter Reihenfolge als Zielpunkte vorgeschlagen. Der Bedienkomfort für den Benutzer des Kraftfahrzeuges wird auf diese Weise wesentlich erhöht, da sehr häufig Fahrten durchgeführt werden, die von einem Startpunkt zu einem Zielpunkt und anschließend wieder zu dem ursprünglichen Startpunkt zurückführen. In solchen Fällen kann der Benutzer über eine beispielsweise als Tastatur ausgeführte Eingabeeinheit als Zielpunkt der aktuellen Fahrt den Startpunkt der letzten oder einer der letzten Fahrten anwählen.

Bei einer für die Durchführung des erfindungsgemäßen Navigationsverfahrens geeigneten Navigationsvorrichtung kann der Wegenetzspeicher sowohl im Kraftfahrzeug als auch außerhalb in einem Off-Board-Navigationssystem untergebracht sein. Bei einem außerhalb des Kraftfahrzeuges befindlichen Wegenetzspeicher kann die Recheneinheit vorteilhafterweise über eine als Mobilfunktelefon ausgeführte Kommunikationseinrichtung Kontakt zu einem Verkehrsrechner aufnehmen, der Zugriff auf einen Wegenetzspeicher hat. Die Speichereinheit für die Ablage der Positionsdaten wird vorteilhafterweise im Kraftfahrzeug untergebracht.

Gemäß einer bevorzugten Ausführungsform der erfindungsgemäßen Navigationsvorrichtung umfaßt die vorzugsweise als Tastatur ausgeführte Eingabeeinheit eine Taste, mit der der Startpunkt der letzten Fahrt als Zielpunkt für die aktuelle Fahrt angewählt werden kann. Bei dieser Ausführungsform kann bei einer einfachen Hin- und Rückfahrt durch einen simplen Tastendruck vor Beginn der Rückfahrt die Navigationsvorrichtung mit den aktuellen Zielpositionsdaten versehen werden.

Weitere Vorteile und Merkmale der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine schematische Ansicht einer erfindungsgemäßen Navigationsvorrichtung mit einem On-Board-Wegenetzspeicher;
- Fig. 2: eine schematische Ansicht einer erfindungsgemäßen Navigationsvorrichtung mit einem Off-Board-Wegenetzspeicher.

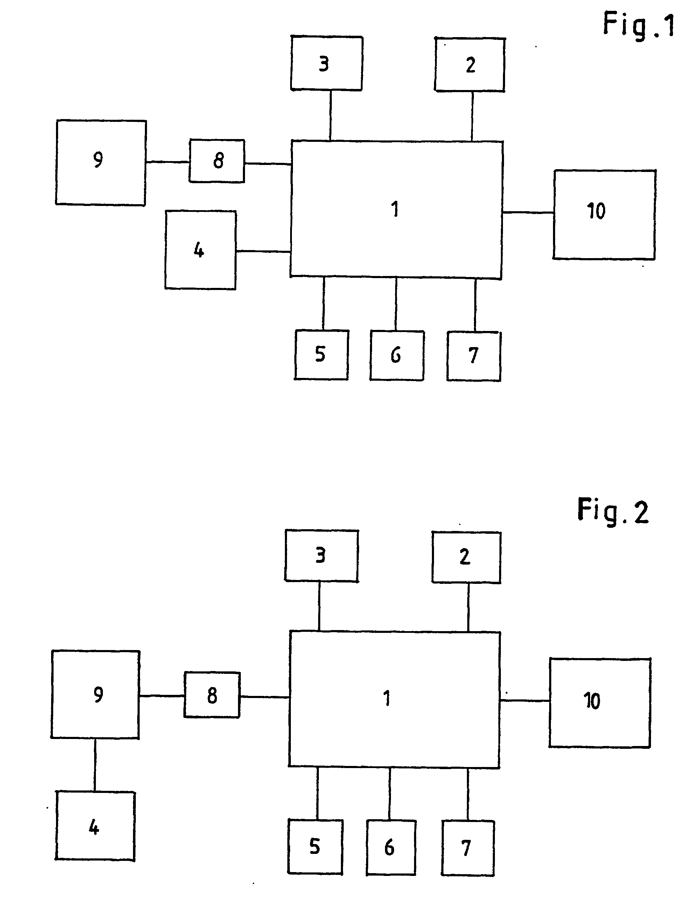

Das in Fig. 1 abgebildete Ausführungsbeispiel einer erfindungsgemäßen Navigationsvorrichtung umfaßt eine Recheneinheit 1, die mit einer beispielsweise als Tastatur 2 ausgeführten Eingabeeinheit und einer beispielsweise als Flüssigkristalldisplay 3 ausgeführten Anzeigeeinheit versehen ist. In dem in Fig. 1 dargestellten Ausführungsbeispiel hat die Recheneinheit 1 Zugriff auf einen im Kraftfahrzeug vorhandenen Wegenetzspeicher 4, in dem beispielsweise auf CD-Roms Straßenkarten und damit zusammenhängende Informationen, wie beispielsweise Streckenbeschränkungen abgelegt sind. Zusätzlich kann die Recheneinheit 1 mit Sensoreinheiten 5, 6, 7 verbunden sein, die beispielsweise einen GPS-Empfänger für Signale eines Satelliten-Navigationssystems, eine Sensoreinheit für die Orientierung des Fahrzeuges wie beispielsweise eine Magnetfeldsonde und eine Sensoreinheit für die Registrierung der zurückgelegten Wegstrecke wie beispielsweise einen Radsensor umfassen können.

Außerdem kann die Recheneinheit 1 über eine Kommunikationseinrichtung 8, die beispielsweise als Mobilfunktelefon ausgeführt sein kann, mit einem Verkehrsrechner 9 verbunden sein, der aktuelle Verkehrsnachrichten zur Verfügung stellt. Weiterhin soll die Recheneinheit 1 Zugriff auf einen Speicher 10 haben, in dem Positionsdaten abspeicherbar sind.

Die Ausführungsform gemäß Fig. 2 unterscheidet sich von der beschriebenen Ausführungsform nur dadurch, daß der Wegenetzspeicher 4 nicht im Kraftfahrzeug untergebracht ist, sondern mit dem Off-Board-Verkehrsrechner 9 verbunden ist. Somit werden bei dieser Ausführungsform die Informationen über die zurückzulegende Wegstrecke nicht aus dem fahrzeugeigenen Speicher sondern über die Kommunikationseinrichtung 8 vom Verkehrsrechner 9 abgerufen.

Bei dem erfindungsgemäßen Verfahren kann bei Beginn jeder Fahrt der Startpunkt der Fahrt von der Recheneinheit 1 in dem Speicher 10 abgelegt werden. Beim Beginn einer neuen Fahrt kann der Startpunkt der letzten Fahrt, der in dem Speicher 10 abgelegt wurde, als Zielpunkt für die zu beginnende Fahrt gewählt werden. Beispielsweise kann die Recheneinheit 1 bei Beginn einer jeden Fahrt den Startpunkt der letzten Fahrt aus dem Speicher 10 entnehmen und entsprechend aufbereitet auf dem Display 3 anzeigen, so daß der Benutzer der Navigationsvorrichtung diesen Startpunkt der letzten Fahrt als Zielpunkt der aktuellen Fahrt anwählen kann. Es besteht weiterhin die Möglichkeit in umgekehrter Reihenfolge die Startpunkte einer Anzahl von letzten Fahrten auf dem Display 3 anzuzeigen, aus denen der Benutzer das von ihm gewünschte Ziel auswählen kann.

Denkbar ist auch die Ausstattung der Tastatur 2 mit einer Taste, deren Anwählen automatisch den Startpunkt der letzten Fahrt als Zielpunkt der aktuellen Fahrt bestimmt.

## Patentansprüche

1. Navigationsverfahren für Kraftfahrzeuge mit einer Navigationsvorrichtung, umfassend eine Recheneinheit (1) zur Ausgabe von Fahrtroutenempfehlungen, wobei die Recheneinheit (1) Zugriff auf einen Wegenetzspeicher (4) und eine weitere Speichereinheit (10) hat, in der Positionsdaten abspeicherbar sind, wobei bei einer Fahrt der Startpunkt in der Speichereinheit (10) abgelegt und als Zielpunkt für eine andere Fahrt bereitgehalten wird,
**dadurch gekennzeichnet, dass**
die Startpunkte verschiedener Fahrten in ihrer Reihenfolge in der Speichereinheit (10) abgelegt werden und von der Recheneinheit (1) bei Beginn jeder Fahrt die Startpunkte der letzten Fahrten in umgekehrter Reihenfolge als Zielpunkte vorgeschlagen werden.

2. Navigationsvorrichtung für Kraftfahrzeuge, umfassend eine Recheneinheit (1) zur Angabe von Fahrtroutenempfehlungen, wobei die Recheneinheit (1) Zugriff auf einen Wegenetzspeicher (4) und eine weitere Speichereinheit (10) hat, in der Positionsdaten abspeicherbar sind, wobei bei einer Fahrt der Startpunkt in der Speichereinheit (10) abgelegt und als Zielpunkt für eine andere Fahrt bereitgehalten wird,
**dadurch gekennzeichnet, dass**
in der Speichereinheit (10) die Startpunkte verschiedener Fahrten in ihrer Reihenfolge abgelegt sind und von der Recheneinheit (1) bei Beginn jeder Fahrt die Startpunkte der letzten Fahrten in umgekehrter Reihenfolge als Zielpunkte vorgeschlagen werden.

3. Navigationsvorrichtung nach Anspruch 2, **dadurch gekennzeichnet, dass** der Wegenetzspeicher (4) im Kraftfahrzeug untergebracht ist.

4. Navigationsvorrichtung nach Anspruch 2, **dadurch gekennzeichnet, dass** der Wegenetzspeicher (4) außerhalb des Kraftfahrzeuges in einem Off-Board-Navigationssystem (9) untergebracht ist.

5. Navigationsvorrichtung nach Anspruch 4, **dadurch gekennzeichnet, dass** die Navigationsvorrichtung über eine Kommunikationseinrichtung (8), die als Mobilfunktelefon ausgebildet ist, mit dem Off-Board-Navigationssystem (9) verbunden ist.

6. Navigationsvorrichtung nach einem der Ansprüche 2 bis 5, **dadurch gekennzeichnet, dass** die Speichereinheit (10) in dem Kraftfahrzeug untergebracht ist.

7. Navigationsvorrichtung nach einem der Ansprüche 2 bis 6, **dadurch gekennzeichnet, dass** die Navigationsvorrichtung eine Eingabeeinheit mit einer Taste umfasst, deren Anwählen automatisch den Startpunkt der letzten Fahrt als Zielpunkt der aktuellen Fahrt bestimmt.

## Claims

1. Navigation method for motor vehicles having a navigation device comprising a calculation unit (1) for outputting routing recommendations, the calculation unit (1) having access to a road network memory (4) and a further memory unit (10) in which position data can be stored, the starting point being stored in the memory unit (10) during a journey and being held available as the destination for another journey, **characterized in that** the starting points of various journeys are stored in their sequence in the memory unit (10), and at the start of each journey the calculation unit (1) proposes the starting points of the last journeys in reverse sequence as destinations.

2. Navigation device for motor vehicles comprising a calculation unit (1) for issuing routing recommendations, the calculation unit (1) having access to a road network memory (4) and a further memory unit (10) in which position data can be stored, the starting point being stored in the memory unit (10) during a journey and being held available as the destination for another journey, **characterized in that** the starting points of various journeys are stored in their sequence in the memory unit (10), and at the start of each journey the calculation unit (1) proposes the starting points of the last journeys in reverse sequence as destinations.

3. Navigation device according to Claim 2, **characterized in that** the road network memory (4) is accommodated in the motor vehicle.

4. Navigation device according to Claim 2, **characterized in that** the road network memory (4) is accommodated outside the motor vehicle in an off-board navigation system (9).

5. Navigation device according to Claim 4, **characterized in that** the navigation device is connected to the off-board navigation system (9) via a communications device (8) which is embodied as a mobile phone.

6. Navigation device according to one of Claims 2 to 5, **characterized in that** the memory unit (10) is accommodated in the motor vehicle.

7. Navigation device according to one of Claims 2 to 6, **characterized in that** the navigation device comprises an input unit with a push button key whose activation automatically determines the starting point of the last journey as the destination of the current journey.

## Revendications

1. Procédé de navigation pour véhicules avec un appareil de navigation, comprenant un ordinateur (1) pour émettre des recommandations de trajet, l'ordinateur (1) ayant accès à une mémoire de réseau routier (4) et à une autre unité de mémorisation (10) dans laquelle peuvent être enregistrées des informations de position, le point de départ étant enregistré dans l'unité de mémorisation (10) lors d'un déplacement et conservé comme point de destination pour un autre déplacement, **caractérisé en ce que** les points de départ des différents déplacements sont enregistrés dans leur ordre dans l'unité de mémorisation (10) et les points de départ des déplacements précédents sont proposés par l'ordinateur (1) comme points de destination au début de chaque déplacement dans l'ordre inverse.

2. Appareil de navigation pour véhicules, comprenant un ordinateur (1) pour émettre des recommandations de trajet, l'ordinateur (1) ayant accès à une mémoire de réseau routier (4) et à une autre unité de mémorisation (10) dans laquelle peuvent être enregistrées des informations de position, le point de départ étant enregistré dans l'unité de mémorisation (10) lors d'un déplacement et conservé comme point de destination pour un autre déplacement, **caractérisé en ce que** les points de départ des différents déplacements sont enregistrés dans leur ordre dans l'unité de mémorisation (10) et les points de départ des déplacements précédents sont proposés par l'ordinateur (1) comme points de destination au début de chaque déplacement dans l'ordre inverse.

3. Appareil de navigation selon la revendication 2, **caractérisé en ce que** la mémoire de réseau routier (4) est installée dans le véhicule.

4. Appareil de navigation selon la revendication 2, **caractérisé en ce que** la mémoire de réseau routier (4) est installée à l'extérieur du véhicule dans un système de navigation non embarqué (9).

5. Appareil de navigation selon la revendication 4, **caractérisé en ce que** l'appareil de navigation est relié au système de navigation non embarqué (9) par le biais d'un dispositif de communication (8) qui est réalisé sous la forme d'un radiotéléphone mobile.

6. Appareil de navigation selon l'une des revendications 2 à 5, **caractérisé en ce que** l'unité de mémorisation (10) est logée dans le véhicule.

7. Appareil de navigation selon l'une des revendications 2 à 6, **caractérisé en ce que** l'appareil de navigation comprend une unité de saisie munie de touches qui, lorsqu'elles sont actionnées, fixe automatiquement le point de départ du dernier trajet comme point de destination du trajet actuel.
